# EUROPEAN PATENT SPECIFICATION

(11) **EP 1 487 727 B1**
(45) Date of publication and mention of the grant of the patent: **23.08.2006**
(21) Application number: 02736464.5
(22) Date of filing: 28.03.2002
(51) Int. Cl.: B65G 53/46, B65G 53/48

(54) **MOBILE PNEUMATIC TRANSPORT KIT FOR DUSTY MATERIALS**
MOBILES PNEUMATISCHES FÖRDERSYSTEM FÜR SCHÜTTFÄHIGES GUT
KIT DE TRANSPORT PNEUMATIQUE MOBILE POUR MATIERES POUSSIEREUSES

(43) Date of publication of application: 22.12.2004
(73) Proprietor: MKS Marmara Entegre Kimya San. A.S., 80690 Istanbul (TR); Umde Muhendislik Muteahhitlik Tic. Ltd. Sti., 81220 Istanbul (TR)
(72) Inventor: UZUN, Isa, 80690 Istanbul (TR); BOSNA, Hikmet, 81220 Istanbul (TR); AKYUREK, Mustafa, 80690 Istanbul (TR)
(74) Representative: Dereligil, Ersin
(86) International application number: PCT/TR2002/000012
(87) International publication number: WO 2003/082713

(56) References cited:
- DE-A- 19 925 151
- DE-A- 19 960 118
- DE-C- 926 417
- DE-U- 20 008 584
- FR-A- 1 091 362
- GB-A- 2 089 754
- US-A- 2 276 805

## Description

### TECHNICAL FIELD

The present invention relates to an equipment for discharging of dusty powder materials, and it more particularly relates to a skid mounted compact kit capable of preventing leakage and retrieving dusty materials during discharge by pneumatic transport (e.g. see: document DE-A-199 60 118).

### BACKGROUND OF THE ART

Free flowing bulk materials, as known very well by the person skilled in the art, are either composed of granular materials such as in pulverized and grain forms or they are composed of dusty fine particles and called powder materials.

As far as free flowing material transportation in bulk form is concerned, discharge operation has always been the major issue, since these bulk materials need to be stored in silos for subsequent usage.

In practice, granular materials are transported mainly by conventional containers which are discharged by tilting chassis trucks or by big-bags which are again discharged by special equipments. However, it is technically impossible to discharge a granular material into a silo without intervention of an interface equipment.

This interface equipment simply comprises some kind of transportation air source such as a blower and conduit for conveying the granular materials from the container truck to the silo. Since the material is not dusty (powder), it is a sound idea to feed the granule particles into a pneumatic transportation line by using a feeding device which is open to air and carry the granules to the silo with low pressure air.

However, the above-mentioned embodiment for conveyance of the granular materials from a container into a silo is not efficient and suitable for the above-mentioned dusty and powder materials.

The known embodiments essentially designed for the conveyance of granular material after discharge from the container to the silo comprise basically a star valve with an open-to-air inlet serving feeding of the granular material into the pneumatic transport air supplied by a suitable source or a blower. The star valve is a rotary valve with a rotor comprising of several compartments for holding certain amount of the granular material. The granular material to be conveyed is discharged to the upper compartments of the star valve and then conveyed and fed into the transport air by rotation of the rotor of the star valve. When the granular material drops into the pneumatic transport line due to gravitational force, the compartments of the star valve at this section are filled with pneumatic transport air. The compartments, filled with slightly pressurized transport air, rotate to the top material feeding section of the star valve where the air escapes to atmosphere when new granular material flows from the feeding port. Since the material to be discharged from the container is in granular form, no blowing dust leakage to environment or atmosphere is encountered.

This effect is the underlying reason that accounts for the practitioners refrain from adopting such an embodiment for dust-based powder materials. Nevertheless, some applications are observed to employ the same embodiment for the dust-based powder material conveyance between the discharge location and the silo. However, the above-mentioned counter air flow via emptied compartments of the star valve induces the dust particles to be carried to atmosphere and leads to an environmentally unacceptable contamination of the surrounding atmosphere and loss of material. This contamination is strictly based upon the character of the dust material that could lead severe health effects, explosion and fire risks.

Subject to this condition, a bright proposal has been put forward to overcome this deficiency; namely a silo truck as referred in trade and industry for dust-based powder material discharge and conveyance thereof. A silo truck solution is based upon a complete closed form embodiment for avoiding dust leakage during discharge of the powder from a reservoir.

A silo truck comprises a conventional truck having a reservoir or so called a silo articulated therebehind and specific apparatus for feeding the dusty powder material contained by the silo.

Although this silo truck proposal provides a dust leakage free embodiment, there are several disadvantages confronted in practice. For example, since this is simply a truck equipped with special silo based embodiment, it is technically almost impossible to transport considerable amount of bulk dusty powder materials at once which is of crucial importance when the transportation cost and time consumption aspects are taken into account individually or in combination.

Another disadvantage referred to silo trucks is simply associated with the residual material left at the bottom region of the silo at the end of the discharging operation. For example, once the dusty powder material in the silo decreases towards the end of the discharging operation, some certain amount of dusty powder material always resides at the bottom region and on the walls of the silo, and a complete discharge of the silo requires an additional labor which is not affordable in some cases. Either the silo must be devoted to one type of dusty powder material transportation which is not practical, or it must be flushed and cleaned after each transportation and discharging operation which is a necessity for dry certificate.

Still another disadvantages of the silo truck embodiment is the necessity to use containers which can withstand pressures above atmospheric.

### DESCRIPTION OF THE INVENTION

Object of the present invention is to prevent dusty powder material leakage during discharging from a container or big-bag and conveyance to a storage silo, whereby preventing contamination of environment.

Another object of the present invention is to prevent loss of material during discharging and conveyance operations of dusty powder materials from containers and big-bags.

Still another object of the present invention is to provide a compact unique mobile kit capable of connecting and discharging any type of container means.

In order to achieve above mentioned objects, following preferred embodiments are provided with the present invention.

The first preferred embodiment of the present invention comprises a material inlet port for feeding dusty powder material from a container into a screw conveyor, a star valve having compartments and into which the dust powder material is conveyed by the screw conveyor, a transport air line through which transport air flows, and having transport air and material inlets, and a transport air and material mixture outlet.

The development in the first preferred embodiment is characterized in that a transport air discharge line is connected as a by-pass line between the said star valve and a vacuum chamber, which is located at the bottom of a jet filter in order to clean the said air coming through said transport air discharge line, an exhaust fan is placed at the suction line of the filter and a holder platform having plurality of wheels holds the devices together whereby defining a compact mobile kit.

A pneumatic transport air line from an external source is connected to the bottom outlet region of the star valve where the dusty powder material conveyed by the compartments of the star valve fall freely and get in contact with the pneumatic transportation air and are carried towards the main storage silo. While great portion of the dusty powder material is swept by the pneumatic transportation air, the emptied compartments of the star valve are filled with some transportation air together with some very fine powder particles thereon and then leaves this region. So, as mentioned in the first embodiment, said transport air discharge line is constructed between the dead-zone of the star valve where the empty compartments are passing through and the vacuum chamber so that the leaking air containing fine particles is directed to upward direction and filtered by the cartridges of the jet filter.

Accordingly, in the second preferred embodiment of the invention, it is provided that a jet filter with its already mounted cartridges separates dusty powder material in the sucked transport air, and the fine dusty powder material collected on the surface of the cartridges are discharged back to the inlet port of the star valve either by vibrational or air-jet shocks on filter cartridges in the opposite direction to air flow. This is a very well known technical issue about the jet filters which are equipped with timers and selenoid valves, and never get plugged and never let any particles escape to atmosphere as long as they are chosen with the right airflow capacities.

In the third preferred embodiment of the present invention, the mobile kit of the present invention is a closed compact mobile unit holding the screw conveyor, star valve, jet filter and pneumatic transport line, whereby assembly of this kit to a container, container truck or a big-bag is versatile with respect to the known embodiments and also dusty powder material leakage is avoided.

In the fourth preferred embodiment of the present invention, the mobile kit comprises a control panel and an electrical cabinet for controlling the jet filter, the star valve, the screw conveyor, and the interlocks for adjusting the sequences of discharging operations.

In the fifth preferred embodiment of the present invention, the electronic control panel is capable of controlling a solenoid valve in case of the clogging problems of the transport line to the storage silo.

In the sixth preferred embodiment of the present invention, the mobile kit is run under slightly vacuum to prevent any dusty powder leakage to the atmosphere and surroundings. Thanks to this embodiment, any combustible dusty powder material is discharged from containers without being affected by atmospheric conditions.

### DESCRIPTION OF THE FIGURES

The present invention must be evaluated together with the figures that are described below in order to understand the advantages of the new embodiment and the supplementary features thereof.
Figure 1 illustrates a front view of the mobile kit according to the invention.

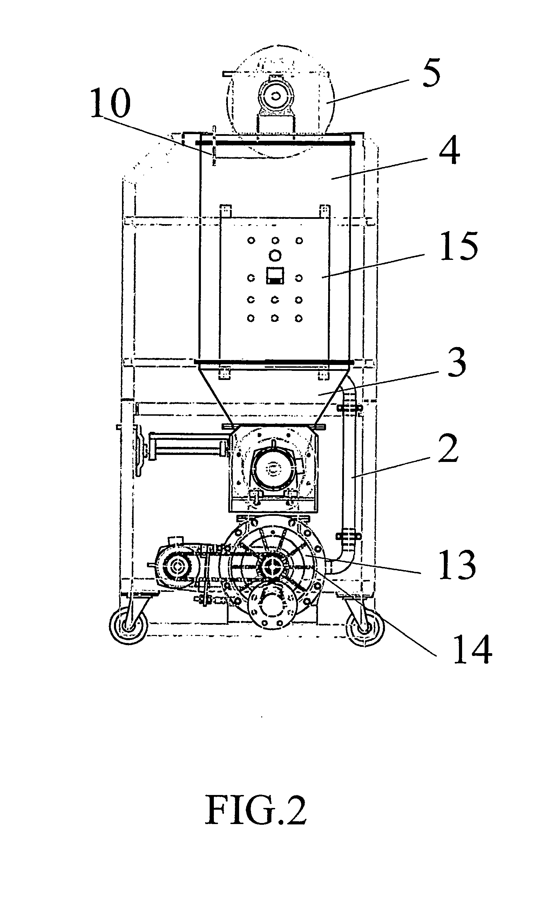

Figure 2 illustrates a side view of the mobile kit according to the invention.

### REFERENCE NUMBERS OF PARTS IN FIGURES

- 1: Star valve
- 2: Transport air discharge line
- 3: Vacuum chamber
- 4: Jet filter
- 5: Exhaust fan
- 6: Material inlet port
- 7: Screw conveyor
- 8: Transport air inlet
- 9: Transport air and material outlet
- 10: Slide gate
- 11: Transport air line (contact zone)
- 12: Chassis (holder platform)
- 13: Compartments of the star valve
- 14: Rotor of the star valve
- 15: Control panel
- 16: Solenoid valve
- 17: Electrical cabinet
- 18: Gate valve

### DETAILED DESCRIPTION OF THE INVENTION

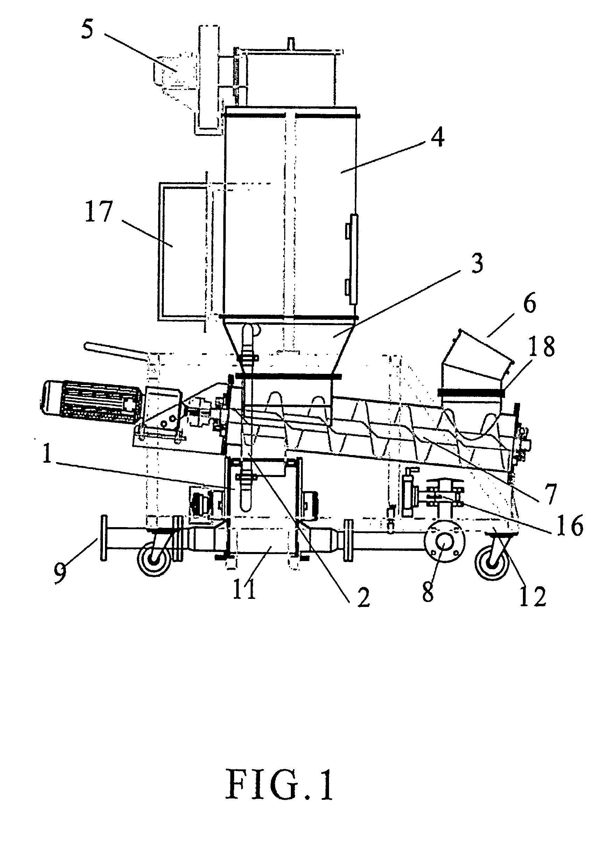

Figure 1 illustrates a front view of the mobile kit. According to the figure, dusty powder material contained in a conventional container articulated to a truck or independently situated container is fed by gravity to a material inlet port (6). Having been fed by gravity to the material inlet port (6), the dusty powder material flows into the screw conveyor (7) with a flow rate adjusted by a manual gate valve (18) located below the material inlet port (6). The so fed material is conveyed by the screw conveyor (7) to the inlet port of the star valve (1).

The star valve (1) is composed of several compartments (13), a compartment being separated by plates from the neighboring compartments and located radially on a rotor (14) where certain amount of dusty powder material is disposed therein. As the rotor (14) rotates the dusty powder material fills the compartments (13) adjacent to the top inlet port of the star valve (1) and then is carried to the bottom outlet port of the star valve (1) where the dusty powder material freely falls into the pneumatic transport line (11) through which transport air flows. This means that the conveyed material is mixed with the pneumatic transportation air introduced by a transport air inlet (8) and then the material and air mixture is discharged from an outlet (9) to the storage silos.

The star valve (1) comprises an opening for a leaked transport air discharge line (2) connected from one end to the star valve (1) and connected from other end to a vacuum chamber (3). Once the compartments (13) get empty by free fall of the dusty powder materials at the bottom of the star valve (1), they are filled by the pneumatic transportation air. This replacement air is transported by the transport air discharge line (2) to the vacuum chamber (3). This replacement air is prevented from escaping to the material inlet port (6) by keeping the vacuum chamber (3) at slightly below atmospheric pressure (scientifically called vacuum) by the utilization of an exhaust fan (5) located at the upper region (exhaust line) of a jet filter (4).

Once the leaked replacement air is sucked by the exhaust fan (5), the fine particles in the sweeping air are held and accumulated on the surface of the cartridges of the jet filter (4) and magnitude of sucking which determine the vacuum within the vacuum chamber (3) is adjusted by a manual slide gate (10) placed on the outlet nozzle of the exhaust fan (5). The accumulated fine particles on the cartridge surface are discharged to the inlet port of the star valve (1) as a result of counter shocks applied by the instruments within the jet filter (4) on adjustable periodic cycles.

Since the major goal of the embodiment of the present invention is based on preventing leakage of dusty powder material during discharge coping with the clean environment standards, the vacuum chamber (3) is connected directly to the star valve (1) in order to feed the material disengaged from the jet filter (4) back to the inlet port of the star valve (1) and have all the dusty powder material be discharged to the main storage silo without any leakage and loss of material. The vacuum chamber is fixed to the jet filter (4) positioned upper side thereof defining a closed form connection.

The mobile kit, as disclosed above, is held on a holder platform having plurality of wheels, whereby movement ability is enhanced for assembling the kit to a container or container truck.

An electronic control panel (15) and an electrical cabinet (17) are provided to control some functional parameters of the kit. The electronic control panel (15) does not allow the kit to function as far as the jet filter (4) is not in operation. On the other hand, in case of a failure of the star valve (1), the screw conveyor (7) is not allowed to operate by the electronic control panel (15). If the transport air line (11) is clogged, a solenoid valve (16) is activated to regulate the transport air pressure in the transport air inlet (8) line. Furthermore, the kit comprises a free seperate input signal port that is capable of plug-in for aborting the functions of the star valve (1) and the screw conveyor (7). This signal is to be supplied by storage silo system if there happens to be a condition to abort the discharging operation.

Furthermore, all of the electrical and electronic equipment used in this kit are explosion-proof type, and all of them are grounded to the main skid, so grounding the whole kit with a single cable is enough for this aim. Also, the safety guards of all of the moving parts are coping with the health and safety standards. The kit is so constructed that it can be used under any climatic conditions in open air.

## Claims

1. A device for dusty powder material discharge and conveyance from any container to storage silos comprising a material inlet port (6), a screw conveyor (7) connected to the material inlet port (6), a star valve (1) having compartments (13) the dusty powder material being conveyed by the screw conveyor (7) thereto, a transport air line (11), the transport air being flowing therethrough, and having a transport air inlet (8) and a transport air and material outlet (9) and a holder platform (12) having a plurality of wheels, holding the devices together and defining a mobile kit, **characterized in that** a transport air discharge line (2) is connected to said star valve (1) from one end and is connected from the other end to a vacuum chamber (3) which is located at the bottom of a jet filter (4) in order to clean the said air coming through transport air discharge line (2) and an exhaust fan (5) is placed at the suction line of the jet filter (4).

2. A mobile kit according to claim 1, **characterized in that** a jet filter (4) with already mounted cartridges thereof separates dusty powder material in the sucked transport air (2), and the fine dusty powder material collected on the surface of the cartridges is discharged back to the inlet port of the star valve (1) either by vibrational or air-jet shocks.

3. A mobile kit according to any one of the preceding claims, **characterized in that** assembly of said star valve (1), said transport air discharge line (2), said vacuum chamber (3) and said jet filter (4) are closed to atmosphere for avoiding dusty powder material leakage.

4. A mobile kit according to any one of the preceding claims, **characterized in that** a control panel (15) and an electrical cabinet (17) are provided for controlling the jet filter (4), the star valve (1), the screw conveyor (7), and the interlocks for adjusting the sequences of discharging operations.

5. A mobile kit according to claim 4, **characterized in that** said electronic control panel (15) is capable of controlling a solenoid valve (16) in case of the clogging problems of the transport line (11).

6. A mobile kit according to any of the preceding claims, **characterized in that** it is run under slight vacuum for preventing any dust powder from leakage to the atmosphere and surroundings, and used for discharging any combustible dusty powder material without being affected by atmospheric conditions.

## Patentansprüche

1. Vorrichtung zum Entladen und zur Beförderung staubigen Pulvermaterials von einem beliebigen Behälter zu Speichersilos, umfassend eine Materialeinlassöffnung (6), einen Schneckenförderer (7), verbunden mit der Materialeinlassöffnung (6), ein Sternventil (1), welches Kammern (13) aufweist, wobei das staubige Pulvermaterial durch den Schneckenförderer (7) eben dorthin befördert wird, eine Transportluftleitung (11), durch welche die Transportluft hindurch fließt und welche einen Transportlufteinlass (8) und einen Transportluft-und-Materialauslass (9) aufweist, und eine Halterplattform (12), welche die Vorrichtungen zusammenhält, eine Mehrzahl von Rädern aufweist und eine mobile Ausrüstung definiert, **dadurch gekennzeichnet, dass** eine Transportluftausstoßleitung (2) mit dem Sternventil (1) an einem Ende verbunden ist und mit dem anderen Ende mit einer Vakuumkammer (3) verbunden ist, welche an der Unterseite eines Strahlfilters (4) angeordnet ist, um die Luft, die durch die Transportluftausstoßleitung (2) herankommt, zu reinigen, und dass ein Sauggebläse (5) an der Saugleitung des Strahlfilters (4) angeordnet ist.

2. Mobile Ausrüstung gemäß Anspruch 1, **dadurch gekennzeichnet, dass** ein Strahlfilter (4) mit bereits angebrachten Patronen staubiges Pulvermaterial in der angesaugten Transportluft (2) trennt und das feine, staubige Pulvermaterial, welches auf der Oberfläche der Patronen gesammelt wird, zurück zur Einlassöffnung des Sternventils (1) entweder durch Vibrationsstöße oder Luftstrahlstöße entladen wird.

3. Mobile Ausrüstung gemäß jedem der vorangehenden Ansprüche, **dadurch gekennzeichnet, dass** der Zusammenbau des Sternventils (1), der Transportluftausstoßleitung (2), der Vakuumkammer (3) und des Strahlfilters (4) zur Atmosphäre hin abgeschlossen ist, um das Entweichen staubigen Pulvermaterials zu vermeiden.

4. Mobile Ausrüstung gemäß jedem der vorangehenden Ansprüche, **dadurch gekennzeichnet, dass** eine Schalttafel (15) und ein Elektroschaltschrank (17) bereitgestellt sind, um den Strahlfilter (4), das Sternventil (1), den Schneckenförderer (7) und die Sperren zum Anpassen der Abfolge der Entladetätigkeiten zu steuern.

5. Mobile Ausrüstung gemäß Anspruch 4, **dadurch gekennzeichnet, dass** die elektronische Schalttafel (15) in der Lage ist, ein Solenoidventil (16) im Falle von Verstopfungsproblemen der Transportleitung (11) zu steuern.

6. Mobile Ausrüstung gemäß jedem der vorangehenden Ansprüche, **dadurch gekennzeichnet, dass** sie unter leichtem Vakuum gefahren wird, um das Entweichen jeglichen Staubpulvers in die Atmosphäre und die Umgebung zu verhindern, und dass sie verwendet wird, um jedes beliebige verbrennbare staubige Pulvermaterial zu entladen, ohne dass es durch die atmosphärischen Bedingungen in Mitleidenschaft gezogen wird.

## Revendications

1. Dispositif pour l'évacuation et le transport de matériaux en poudre de poussière de n'importe quel conteneur à des silos de stockage, comprenant un orifice d'entrée de matériau (6), un convoyeur à vis (7) connecté à l'orifice d'entrée de matériau (6), une soupape en étoile (1) ayant des compartiments (13) en direction desquels est transporté le matériau de poudre de poussière par le convoyeur à vis (7), une conduite aérienne de transport (11) traversée par le flux de poussière et ayant une entrée d'air de transport (8) et une sortie de matériau et d'air de transport (9) et une plateforme support (12) ayant une pluralité de roues maintenant les dispositifs ensemble et définissant un kit mobile, **caractérisé en ce qu'**une conduite d'évacuation d'air de transport (2) est connectée, à une extrémité, à la dite soupape en étoile (1) et est connectée, à l'autre extrémité, à une enceinte sous vide (3) qui est logée au fond d'un filtre aéropulsé (4) afin de purifier ledit air passant par la conduite d'évacuation d'air de transport (2) et **en ce qu'**un ventilateur d'extraction (5) est placé sur la conduite d'évacuation d'air de transport (2) du filtre aéropulsé (4).

2. Kit mobile selon la revendication 1, **caractérisé en ce qu'**un filtre aéropulsé (4) avec des cartouches prémontées sépare le matériau de poudre de poussière dans l'air de transport aspiré (2) et le matériau de fine poudre de poussière collecté à la surface des cartouches est évacué par retour au port d'entrée de la soupape en étoile (1) soit par chocs vibrants soit par jet d'air.

3. Kit mobile selon l'une des revendications précédentes, **caractérisé en ce que** l'assemblage de ladite soupape en étoile (1), de la dite conduite d'évacuation d'air de transport (2), de la dite chambre à vide (3) et dudit filtre aéropulsé (4) est fermé à l'atmosphère pour éviter des fuites de matériaux de poudre de poussière.

4. Kit mobile selon l'une des revendications précédentes, **caractérisé en ce qu'**un panneau de commande (15) et une armoire électrique (17) sont prévus pour commander le filtre aéropulsé (4), la soupape en étoile (1), le convoyeur à vis (7) et les interblocages pour ajuster les séquences d'opérations de décharge.

5. Kit mobile selon la revendication 4, **caractérisé en ce que** ledit panneau de commande électronique (15) est en mesure de commander une vanne électromagnétique (16) en cas de problème de colmatage de la conduite de transport (11).

6. Kit mobile selon l'une des revendications précédentes, **caractérisé en ce qu'**il tourne sous vide léger pour éviter toute fuite de poudre de poussière dans l'atmosphère et l'environnement et est utilisé pour évacuer tout matériau de poudre de poussière combustible sans être affecté par l'environnement.
